# EUROPEAN PATENT SPECIFICATION

(11) **EP 3 271 203 B1**
(45) Date of publication and mention of the grant of the patent: **03.06.2020**
(21) Application number: 16713316.4
(22) Date of filing: 15.03.2016
(51) Int. Cl.: B60K 7/00, B60K 17/04

(54) **ELECTRIC HUB DRIVE WITH BRAKING ASSEMBLY**
ELEKTRISCHER NABENANTRIEB MIT BREMSANORDNUNG
ENTRAÎNEMENT DE MOYEU ÉLECTRIQUE COMPRENANT UN ENSEMBLE DE FREINAGE

(30) Priority: 17.03.2015 GB 201504447
(43) Date of publication of application: 24.01.2018
(73) Proprietor: Qinetiq Limited, Farnborough, Hampshire GU14 0LX (GB)
(72) Inventor: THOMPSON, Robert William, Malvern Worcestershire WR14 3PS (GB)
(74) Representative: QINETIQ IP
(86) International application number: PCT/EP2016/055539
(87) International publication number: WO 2016/146625

(56) References cited:
- EP-A1- 1 895 183
- WO-A1-2007/141841
- US-A1- 2005 061 565
- US-B2- 8 316 973

## Description

The present invention relates to an electric hub drive with a braking assembly, in particular, an electric hub drive comprising a hub drive housing, with a braking assembly contained within the housing.

Electric drive wheel hubs are used in situations where it is advantageous for vehicle wheels to be driven independently, for example, where the vehicle is large or used on uneven terrain. The wheel hub typically comprises a housing containing an electric rotor, and a drivetrain including a drive shaft and a gearing mechanism, with the components arranged inside the housing to ensure the overall assembly is water tight. This allows the assembly to be used on a wide variety of terrains and in various weather conditions.

A braking mechanism is provided to retard the wheel. The braking mechanism is for example formed from a brake disc and calliper of a size to ensure that the torque generated by braking such a large vehicle at various speeds is dealt with appropriately. For example, a vented or air-cooled brake disc may be used in conjunction with a calliper to create the necessary energy absorption. However, since the overall drive assembly is mounted on the individual wheel rather than centrally on the vehicle, the entire assembly is limited in size to the wheel rim diameter, in other words, the diameter of the inner volume of the wheel itself. Practically, in large-wheeled vehicles having wheels with rim diameters of over 25 inches (approximately 635 mm), it is relatively easy to provide a brake disc and calliper assembly that provides sufficient braking under a wide range of conditions, since this sits easily in the radial space between the hub drive and the rim of the wheel. However, issues arise when smaller diameter wheels, those with rims of less than 21 inches (approximately 533 mm) in diameter, as it can be difficult to house either a sufficient diameter brake disc or multiple smaller brake discs within the space provided by the inner volume of the wheel. Although brake discs with smaller diameters can be coupled together to use with a particular calliper, and this forms a practical solution for some wheel hubs, this is not always desirable as there is only limited space laterally within the wheel due to the other components of the hub drive. The overall lateral dimension is therefore limited by the useful size of the tyre and the space available for a wheel hub to either sit underneath a vehicle or project outwards from a vehicle in use.

EP1895183 discloses a brake structure for a wheel rotating device, which comprises a motor provided in a wheel and a braking mechanism that comprises a brake rotor to rotate with the wheel and frictional members to be in contact with the brake rotor for generation of braking force.

The present invention aims to address these problems by providing an electric hub drive in accordance with appended claim 1.

Mounting the braking formation within the housing removes the need to position any form of braking means radially within space between any housing and the inner surface of a wheel rim as done in existing vehicles. This results in being able to position components optimally in reduced volumes created by using smaller diameter wheel rims in a wider variety of vehicles.

In accordance with the invention the braking formation is mounted within the housing and coupled to be rotationally driven by a suitable part of the drive transmission system. The braking formation is coupled to be rotationally driven at an angular velocity greater than that of the output shaft of the hub drive.

Conventionally, the input shaft of an electric hub drive is driven by a suitable electric drive means, the output shaft of an electric hub drive is configured to drive the wheel, and the driven input shaft angular velocity is reduced to the driving output shaft angular velocity by a drive transmission system including a gearing assembly. In such a case the braking formation is coupled to be rotationally driven at an angular velocity greater than that of the output shaft of the hub drive by means of a torque coupling to a part of the gearing assembly having an angular velocity greater than that of the output shaft and for example forward of at least a final gearing reduction. For example, the gearing assembly includes a final reduction gear the output of which reduction gear drives the hub output shaft, and the braking formation has a torque coupling to an input of the reduction gear.

Preferably the braking formation is carried on a drive shaft coupled to be driven rotationally by the drive transmission system. The braking formation is coupled rotationally to the drive shaft but may be free to move axially relative to the drive shaft.

Preferably, the braking formation is a friction formation selectively engageable against one or more complementary friction surfaces carried within the housing.

Preferably, the braking formation comprises one or more brakes disc. The brake disc or discs may be mounted co-axially on a drive shaft coupled to be driven rotationally by the drive transmission system.

Preferably the friction surface(s) comprise the surfaces of one or more brake pads carried within the housing, and for example mounted in a rotationally static relationship to the housing. Thus, preferably, the braking assembly further comprises a plurality of brake pads mounted within the housing and adapted to contact the braking formation.

In a possible embodiment, a plurality of friction surfaces, for example comprising a plurality of brake pads, are provided on one or more carrier formations. The carrier formation is for example a carrier disc. The pads may be disposed across the surface of the carrier disc.

A carrier formation such as a carrier disc may be provided on either side of the brake disc, so as to engage a respective surface of the brake disc and effect a braking action. In cases where more than one disc is provided in axial array a carrier formation such as a carrier disc with brake pads or other friction surfaces on both sides may be placed between discs.

Preferably the braking assembly further comprises an actuation means to effect selective engagement and disengagement of the braking formation against the friction surface(s). In a possible embodiment the actuation means is operable to move the braking formation into and out of engagement with the friction surface(s). In an alternative embodiment the friction surface(s) are carried on a carrier formation and the actuation means is operable to move the carrier formation and thereby bring the friction surface(s) into and out of engagement with the braking formation.

In a possible embodiment an actuation means comprises a ball ramp mechanism or a hydraulic cylinder or cylinders or a pneumatic actuator.

Preferably, the hub drive has an inboard side for positioning proximal to a vehicle and an outboard side for positioning distal to a vehicle, and the brake disc is positioned on the inboard side of the hub drive.

The hub drive further comprises an electric drive means coupled to drive the input shaft in the form of an electric motor having a motor rotor for driving the hub drive input shaft mounted within the housing, the motor rotor for example being positioned co-axially around the hub drive input shaft.
Preferably, the hub drive further comprises a gearing assembly mounted within the housing that is positioned axially with respect to the input shaft.

Preferably the hub drive output shaft is coupled to be driven by an output side of the gearing system, and for example coupled to be driven by an output shaft of an output reduction gear.

Preferably, the brake disc, the rotor and the gearing assembly are arranged axially with each other.

The motor rotor is interposed between the brake disc and the gearing assembly.

Preferably, the housing is adapted to fit within the axial width of a wheel rim of a wheel to be driven by the hub drive.

Preferably, the housing is cooled.

The present invention will now be described by way of example only, and with reference to the accompanying drawings, in which:
Figure 1 is a schematic cross-section of an electric wheel hub braking system in accordance with an embodiment of the present invention; and
Figure 2 is an exploded view of an embodiment of brake disc and pads suitable for use with a braking system in accordance with the present invention.

In the present invention it has been appreciated that it is not necessary to position a brake disc within the radial space between the inner surface of a wheel rim and a hub drive in order to provide sufficient braking at even high torques. In accordance with an embodiment of the present invention, an electric hub drive comprises a housing, a rotary drive transmission system comprising an input shaft, and output shaft, and a torque transfer arrangement to effect a rotational coupling between the input shaft and the output shaft mounted within the housing, and a braking assembly in accordance with the principles of the invention positioned within the housing. The braking means is driven by means of a torque coupling to the drive transmission system, and in particular to a part of the transmission system that has a greater angular velocity than the output shaft that drives the wheel such that it rotates faster than or at the same speed as the wheel during braking.

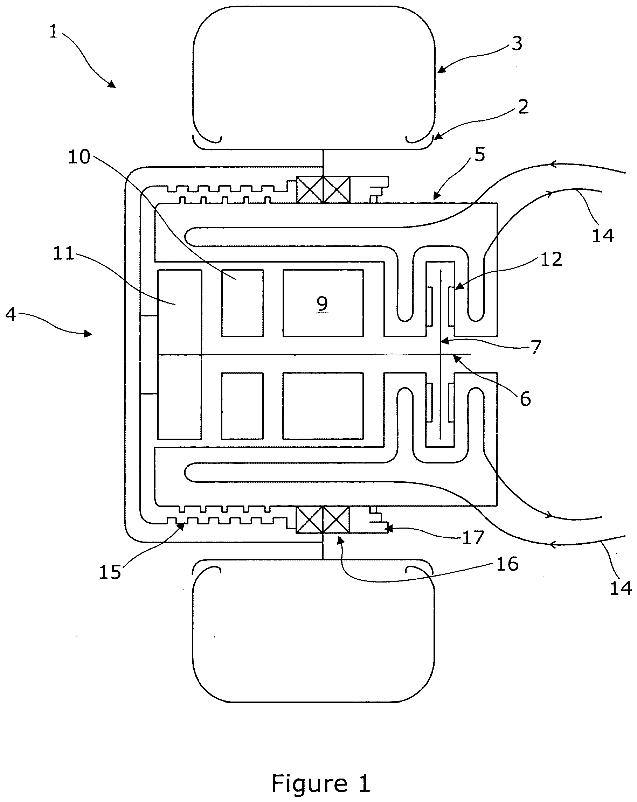

Figure 1 is a schematic cross-section of an electric hub drive system including an electric hub drive incorporating a braking system in accordance with an embodiment of the present invention. An electric hub drive system 1 comprises an electric hub drive 4 to drive a wheel comprising a wheel rim 2 on a wheel bearing 16 sealed by seal 17, the wheel rim generally having the form of an open cylinder, with an inner surface and an outer surface with a tyre 3 mounted radially on the outer surface of the wheel rim 2 for contact with the terrain on which a vehicle (not shown) carrying the wheel hub will drive over.

The volume described by the inner surface of the open cylinder of the wheel rim 2 contains the electric hub drive 4. The hub drive 4 comprises a housing 5 for example of aluminium, containing an electric drive means, a braking assembly, and a drive transmission system including gearing assembly to transmit drive from the electric drive means to the driven wheel.

The electric drive means comprises a rotary electric motor 9 mounted within the housing. The motor is positioned co-axially around the shaft 6. A gearing system in the embodiment comprises a selectively engageable gear change set 10 and a fixed ratio output reduction gear 11. An oil cooler system 15 cools the gearbox.

The braking assembly comprises a shaft 6 mounted within the housing 5, and a braking formation 7, mounted on the shaft 6, such that the braking formation 7 is rotatably driven by the shaft 6. In this embodiment the braking formation 7 is a brake disc, which is mounted co-axially on the drive shaft 6. In other words, the drive shaft 6 passes through the centre of the brake disc.

The gearing assemblies 10, 11 are positioned axially with respect to the shaft 6. This ensures that the brake disc 7, the motor 9 and the gearing assemblies 10, 11 are arranged axially with each other and the shaft 6. This arrangement is optimised to fit all the required components for the hub drive within both the radial space allowed by the wheel rim 2 and the transverse space available to the hub assembly for practical use on a vehicle.

The hub drive 4 has an inboard side for positioning proximal to a vehicle and an outboard side for positioning distal to a vehicle. The brake disc 7 is preferably positioned on the inboard side of the assembly. This is advantageous since this is the side with the stationary casing for connection to the suspension system and to which the braked pad assemblies can be mounted. The outer part of the casing rotates with the wheel.

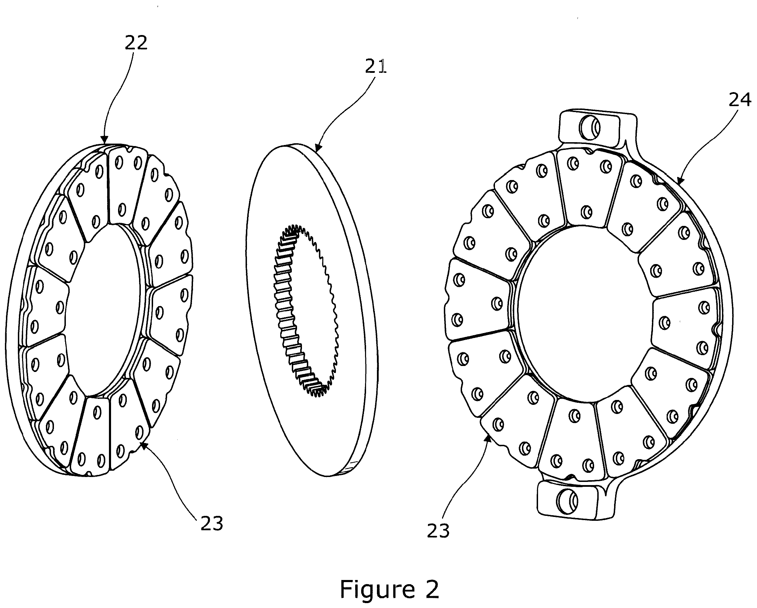

In order to apply sufficient braking by friction with the brake disc 7, a plurality of brake pads 12 are mounted within the housing 5 on cooled discs and adapted to contact the brake disc 7. The arrangement is shown in greater detail in figure 2.

The shaft 6 is torque coupled to a part of the drive transmission system that is rotating at higher speed than the speed output to the wheels. In the embodiment, the shaft 6 is torque coupled to the input side of the output reduction gear 11. The input side of the reduction gear has a higher angular velocity than the output side driving the wheels. Thus the brake disc rotates at a faster speed than the wheels. Typically the input side of the reduction gear will run four times faster than the output side and hence than the wheel, such that the torque capacity of the brake is four times lower than it would be if it were braking the wheel directly. The size of the brake disc 7, the brake pads 12 and the force required to operate the brake are reduce proportionally allowing for a reduction in size and mass compared with existing braking assemblies.

As shown in Figure 1, the housing 5 is adapted to fit within the wheel rim 2. The housing 5 may be cooled using a cooling mechanism 14, which may be, for example, a water cooling mechanism. The use of water cooling instead of air cooling allows the system to be sealed to prevent ingress of dirt. The water cooled hub structure cools the brake pads, as well as the motor housing and the gearbox casing. The gear box is cooled and lubricated by a fixed volume of oil contained inside the hub. This oil fills the gap between the cooled structure supporting the gearbox and the rotating outer casing. A narrow gap is provided with heat transfer features so that the shearing action of the oil in the gap aids heat transfer - heat transfer from static oil is otherwise poor.

Ideally, the brake disc 7 is rotationally coupled to the shaft 6 but is free to move axially, and may be mounted on splines, axial pins, a key way or other connection means to effect this.

The brake disc 7 may be a metal brake disc, such as a steel brake disc, or a composite material, such as a carbon fibre brake disc. The brake disc may be closed or vented, and may be cooled. As noted a closed water cooled system is preferred allowing the housing 5 to be completely sealed from the ingress of external elements such as water, dust, mud and dirt.

The brake pads 12 may be formed from materials having ideal frictional relationships with the brake disc material, such as sintered metallic materials or bonded organic materials.

Figure 2 illustrates a preferred embodiment of disc brake assembly with brake components disassembled.

A brake disc 21 is provided to be mounted on and rotated with a drive shaft, in the preferred case at an angular velocity that is greater than that of the hub output shaft, and for example by coupling to the input stage of a final reduction gear as described with reference to figure 1. The brake disc is annular and provided on the inside with splines whereby it rotates with the shaft but floats axially.

Paired brake pad assemblies are provided either side of the brake disc. An inner brake pad assembly 22 is fixed in the hub case and comprises a carrier disc that carries a plurality of brake pads 23 covering essentially its entire surface. The brake pad assembly is water cooled. An outer brake pad assembly 24 comprising a carrier disc again covered essentially on its entire surface by a plurality of brake pads 23, is mounted within the hub case to moveable axially by a brake actuator (not shown). The outer brake pad assembly is again water cooled.

Under action of the brake actuator, engagement is effected between the brake disc and the paired brake pad assemblies, effecting retardation of the brake disc, and hence of the shaft, and hence because the shaft is torque coupled to the hub drive transmission and for example to the input of the output reduction gear, effects braking of the hub drive and of the wheel.

Although in the embodiment a single brake disc is used, a possible configuration, for example for a higher capacity brake, might be to have a plurality of discs stacked axially. In such an arrangement a carrier disc that carries a plurality of brake pads on each of its opposed faces may then be provided between each adjacent pair of discs in the stacked array.

The hub drive may be adapted for regenerative braking.

Although in the embodiment shown in Figure 1 it is advantageous to position the braking mechanism on the inboard side of the hub drive with the gearing assembly 10, 11 on the outboard side and the electric motor 9 positioned centrally, it is possible to arrange the components differently whilst still maintaining their axial arrangement and thus taking advantage of the main benefits of the present invention. For example, the braking mechanism may be positioned on the outboard side.

## Claims

1. An electric hub drive (4) comprising:
a housing (5);
a rotary drive transmission system comprising an input shaft (6), and output shaft, and a torque transfer arrangement to effect a rotational coupling between the input shaft and the output shaft mounted within the housing;
an electric motor (9) having a motor rotor for driving the input shaft mounted within the housing,
a braking assembly including a braking formation (7) positioned within the housing;
wherein the braking formation is coupled to be rotationally driven by the drive transmission system, and,
**characterised in that**:-
the drive transmission system includes a gearing assembly (10,11) configured to reduce a higher input shaft angular velocity to a lower output shaft angular velocity and the braking formation is coupled to be rotationally driven by a part of the gearing assembly having an angular velocity greater than that of the output shaft,
and the motor rotor is interposed between the braking formation and the gearing assembly (10,11).

2. The hub drive of claim 1, wherein the braking formation is carried on a drive shaft (6) coupled to be driven rotationally by the drive transmission system.

3. The hub drive of claim 1 or claim 2, wherein the braking formation comprises a friction formation (7) selectively engageable against one or more complementary friction surfaces (12) carried within the housing (5).

4. The hub drive of any preceding claim, wherein the braking formation comprises a brake disc (7).

5. The hub drive of claim 4, wherein the braking formation (7) comprises at least one brake disc (7) mounted co-axially on a shaft coupled to be driven rotationally by the drive transmission system.

6. The hub drive of any preceding claim, wherein the gearing assembly (10,11) includes a final reduction gear (11) the output of which reduction gear drives the output shaft, and the braking formation has a torque coupling to an input of the reduction gear.

7. The hub drive of claim 3, wherein the friction surface(s) comprise the surfaces of one or more brake pads (12) carried within the housing (5).

8. The hub drive of claim 7, wherein a plurality of brake pads (23) are provided on one or more carrier formations.

9. The hub drive of claim 8, wherein a plurality of brake pads (23) are provided disposed across the surface of each of one or more carrier discs.

10. The hub drive of claim 9 comprising a pair of carrier discs, one disposed on either side of the brake disc (7), so as to engage a respective surface of the brake disc and effect a braking action in use.

11. The hub drive of claim 3, wherein the braking assembly further comprises an actuation means to effect selective engagement and disengagement of the braking formation (7) against the friction surface(s).

12. The hub drive of any preceding claim, wherein the hub drive has an inboard side for positioning proximal to a vehicle and an outboard side for positioning distal to a vehicle, and the braking formation (7) is positioned on the inboard side.

13. The hub drive of any preceding claim, wherein the housing (5) is adapted to fit within the wheel rim (2) of a wheel.

14. The hub drive of any preceding claim, wherein the housing (5) is cooled.

15. The hub drive of any preceding claim, wherein the gearing assembly (10,11) comprises a selectively engageable gear change set (10) and a fixed ratio output reduction gear (11).

## Patentansprüche

1. Elektrischer Nabenantrieb (4), umfassend:
ein Gehäuse (5);
ein Drehantriebsübertragungssystem, umfassend eine Eingangswelle (6) und eine Ausgangswelle und eine Drehmomentübertragungsanordnung, um eine Drehkopplung zwischen der Eingangswelle und der in dem Gehäuse montierten Ausgangswelle zu bewirken;
einen Elektromotor (9) mit einem Motorrotor zum Antreiben der in dem Gehäuse montierten Eingangswelle;
eine Bremsanordnung, einschließlich einer in dem Gehäuse positionierten Bremsformation (7);
wobei die Bremsformation gekoppelt ist, um von dem Antriebsübertragungssystem drehangetrieben zu werden, und **dadurch gekennzeichnet ist, dass**:-
das Antriebsübertragungssystem eine Getriebeanordnung (10, 11) enthält, die konfiguriert ist, um eine höhere Eingangswellenwinkelgeschwindigkeit auf eine niedrigere Ausgangswellenwinkelgeschwindigkeit zu reduzieren, und die Bremsformation gekoppelt ist, um von einem Teil der Getriebeanordnung mit einer Winkelgeschwindigkeit größer als die der Ausgangswelle drehangetrieben zu werden, und
der Motorrotor zwischen der Bremsformation und der Getriebeanordnung (10, 11) positioniert ist.

2. Nabenantrieb nach Anspruch 1, wobei die Bremsformation auf einer Antriebswelle (6) getragen wird, die gekoppelt ist, um durch das Antriebsübertragungssystem drehangetrieben zu werden.

3. Nabenantrieb nach Anspruch 1 oder Anspruch 2, wobei die Bremsformation eine Reibungsformation (7) umfasst, die selektiv gegen eine oder mehrere komplementäre Reibungsoberflächen (12) eingreifen kann, die in dem Gehäuse (5) getragen werden.

4. Nabenantrieb nach einem der vorhergehenden Ansprüche, wobei die Bremsformation eine Bremsscheibe (7) umfasst.

5. Nabenantrieb nach Anspruch 4, wobei die Bremsformation (7) wenigstens eine Bremsscheibe (7) umfasst, die koaxial auf einer Welle montiert ist, die gekoppelt ist, um durch das Antriebsübertragungssystem drehangetrieben zu werden.

6. Nabenantrieb nach einem der vorhergehenden Ansprüche, wobei die Getriebeanordnung (10, 11) ein endgültiges Ausgangsreduktionsgetriebe (11) enthält, wobei der Ausgang des Untersetzungsgetriebes die Ausgangswelle antreibt, und die Bremsformation eine Drehmomentkopplung mit einem Eingang des Untersetzungsgetriebes aufweist.

7. Nabenantrieb nach Anspruch 3, wobei die Reibungsoberfläche(n) die Oberflächen einer oder mehrerer Bremsbeläge (12) umfasst/umfassen, die in dem Gehäuse (5) getragen werden.

8. Nabenantrieb nach Anspruch 7, wobei mehrere Bremsbeläge (23) auf einer oder mehreren Trägerformationen bereitgestellt sind.

9. Nabenantrieb nach Anspruch 8, wobei mehrere Bremsbeläge (23) bereitgestellt sind, die über die Oberfläche jeder einer oder mehrerer Trägerscheiben angeordnet sind.

10. Nabenantrieb nach Anspruch 9, umfassend ein Paar Trägerscheiben, von denen eine auf jeder Seite der Bremsscheibe (7) angeordnet ist, um in eine jeweilige Oberfläche der Bremsscheibe einzugreifen und in Verwendung eine Bremswirkung zu bewirken.

11. Nabenantrieb nach Anspruch 3, wobei die Bremsanordnung ferner ein Betätigungsmittel umfasst, um ein selektives Ein- und Ausrücken der Bremsformation (7) gegen die Reibungsoberfläche(n) zu bewirken.

12. Nabenantrieb nach einem der vorhergehenden Ansprüche, wobei der Nabenantrieb eine Innenseite zum Positionieren proximal zu einem Fahrzeug und eine Außenseite zum Positionieren distal zu einem Fahrzeug aufweist und die Bremsformation (7) auf der Innenseite positioniert ist.

13. Nabenantrieb nach einem der vorhergehenden Ansprüche, wobei das Gehäuse (5) angepasst ist, um in die Felge (2) eines Rades passt.

14. Nabenantrieb nach einem der vorhergehenden Ansprüche, wobei das Gehäuse (5) gekühlt wird.

15. Nabenantrieb nach einem der vorhergehenden Ansprüche, wobei die Getriebeanordnung (10, 11) einen selektiv eingreifbaren Gangwechselsatz (10) und ein Ausgangsreduktionsgetriebe (11) mit festem Übersetzungsverhältnis umfasst.

## Revendications

1. Entraînement de moyeu électrique (4) comprenant :
un boîtier (5) ;
un système de transmission d'entraînement rotatif comprenant un arbre d'entrée (6) et un arbre de sortie, et un agencement de transfert de couple pour effectuer un couplage en rotation entre l'arbre d'entrée et l'arbre de sortie monté à l'intérieur du boîtier ;
un moteur électrique (9) possédant un rotor de moteur destiné à entraîner l'arbre d'entrée monté à l'intérieur du boîtier,
un ensemble de freinage comprenant une formation de freinage (7) positionnée à l'intérieur du boîtier ;
ladite formation de freinage étant couplée pour être entraînée en rotation par le système de transmission d'entraînement, et, **caractérisée en ce que** :
le système de transmission d'entraînement comprend un ensemble d'engrenage (10, 11) conçu pour réduire une vitesse angulaire d'arbre d'entrée supérieure à une vitesse angulaire d'arbre de sortie inférieure et la formation de freinage est couplée pour être entraînée en rotation par une partie de l'ensemble d'engrenage possédant une vitesse angulaire supérieur à celle de l'arbre de sortie,
et le rotor de moteur est interposé entre la formation de freinage et l'ensemble d'engrenage (10, 11).

2. Entraînement de moyeu selon la revendication 1, ladite formation de freinage étant portée sur un arbre d'entraînement (6) couplé pour être entraîné en rotation par le système de transmission d'entraînement.

3. Entraînement de moyeu selon la revendication 1 ou la revendication 2, ladite formation de freinage comprenant une formation de friction (7) pouvant se mettre en prise sélectivement contre une ou plusieurs surfaces de friction complémentaires (12) portées à l'intérieur du boîtier (5).

4. Entraînement de moyeu selon l'une quelconque des revendications précédentes, ladite formation de freinage comprenant un disque de frein (7).

5. Entraînement de moyeu selon la revendication 4, ladite formation de freinage (7) comprenant au moins un disque de frein (7) monté coaxialement sur un arbre couplé pour être entraîné en rotation par le système de transmission d'entraînement.

6. Entraînement de moyeu selon l'une quelconque des revendications précédentes, ledit ensemble d'engrenage (10, 11) comprenant un engrenage réducteur final (11), la sortie dudit engrenage réducteur entraînant l'arbre de sortie, et ladite formation de freinage possédant un raccord de couple sur une entrée de la réduction équipement.

7. Entraînement de moyeu selon la revendication 3, ladite ou lesdites surfaces de friction comprenant les surfaces d'une ou plusieurs plaquettes de frein (12) supportées à l'intérieur du boîtier (5).

8. Entraînement de moyeu selon la revendication 7, une pluralité de plaquettes de frein (23) étant disposées sur une ou plusieurs formations de support.

9. Entraînement de moyeu selon la revendication 8, une pluralité de plaquettes de frein (23) étant prévues disposées sur la surface de chacun d'un ou plusieurs disques porteurs.

10. Entraînement de moyeu selon la revendication 9, comprenant une paire de disques porteurs, un disposé de chaque côté du disque de frein (7), de façon à mettre en prise une surface respective du disque de frein et à effectuer une action de freinage lors de l'utilisation.

11. Entraînement de moyeu selon la revendication 3, ledit ensemble de freinage comprenant en outre un moyen d'actionnement pour effectuer une mise en prise et une libération sélective de la formation de freinage (7) contre la ou les surfaces de friction.

12. Entraînement de moyeu selon l'une quelconque des revendications précédentes, ledit entraînement de moyeu possédant un côté intérieur pour un positionnement proximal par rapport à un véhicule et un côté extérieur pour un positionnement distal par rapport à un véhicule, et ladite formation de freinage (7) étant positionnée du côté intérieur.

13. Entraînement de moyeu selon l'une quelconque des revendications précédentes, ledit boîtier (5) étant adapté pour s'ajuster à l'intérieur de la jante (2) d'une roue.

14. Entraînement de moyeu selon l'une quelconque des revendications précédentes, ledit boîtier (5) étant refroidi.

15. Entraînement de moyeu selon l'une quelconque des revendications précédentes, ledit ensemble d'engrenage (10, 11) comprenant un ensemble de changement de vitesse pouvant se mettre sélectivement en prise (10) et un engrenage réducteur de sortie à rapport fixe (11).
